# EUROPÄISCHE PATENTANMELDUNG

(11) **EP 2 141 013 A1**
(43) Veröffentlichungstag der Anmeldung: **06.01.2010**
(21) Anmeldenummer: 08011882.1
(22) Anmeldetag: 01.07.2008
(51) Int. Cl.: B32B 15/08, B29C 45/16, B60R 13/00

(54) **Kunststoff-Metall-Verbundkörper**

(71) Anmelder: CCL Design GmbH, 42653 Solingen (DE)
(72) Erfinder: Vahle, Tobias, 42781 Haan (DE); Fleissner, Peter, 55232 Alzey (DE)
(74) Vertreter: Paul, Dieter-Alfred

(57) **Zusammenfassung**

Die Erfindung betrifft einen Kunststoff-Metall-Verbundkörper (1), insbesondere zum Einsatz in Kraftfahrzeugen, mit einer Dekorschicht (2) aus Metall und einer Kunststoffschicht als Trägerschicht (3), welche über ein Spritz-, Spritzguss- oder Pressverfahren mit der Dekorschicht (2) verbunden ist, welcher dadurch gekennzeichnet ist, dass auf Höhe eines Randbereiches (2a) der metallischen Dekorschicht (2) mindestens eine Aussparung in der Form einer Schrumpfungstasche (4) in der Trägerschicht vorgesehen ist, die eine Relativbewegung zwischen Dekorschicht (2) und Trägerschicht (3) während des Abkühlens ermöglicht, um ein unterschiedliches Schrumpfungsverhalten von Dekorschicht (2) und Trägerschicht (3) während des Abkühlens nach der Fertigung auszugleichen. Des weiteren betrifft die Erfindung ein Verfahren zur Herstellung eines solchen Kunststoff-Metall-Verbundkörpers.

## Beschreibung

Die vorliegende Erfindung betrifft einen Kunststoff-Metall-Verbundkörper, insbesondere zum Einsatz in Kraftfahrzeugen, mit einer metallischen Dekorschicht und einer Kunststoffschicht als Trägerschicht, welche durch ein Spritz-, Spritzguss- oder Pressverfahren mit der Dekorschicht verbunden ist. Des weiteren betrifft die Erfindung ein Verfahren zur Herstellung eines solchen Kunststoff-Metall-Verbundkörpers.

Es ist allgemein bekannt, Dekorelemente aus Metall mit Kunststoff zu umspritzen oder zu hinterspritzen. Solche Metall-Kunststoff-Verbundkörper werden dort eingesetzt, wo ein niedriges Eigengewicht bei gleichzeitig hochwertigem Erscheinungsbild gewünscht ist. Dies ist beispielsweise bei der Gestaltung eines Fahrzeuginnenraumes der Fall. Hier werden beispielsweise Lautsprecherabdeckungen, Lüftungsabdeckungen sowie Zierleisten und ähnliches häufig in Edelstahl oder Aluminium-Optik ausgeführt. Diese Dekorschicht kann auch durch Ätzen oder Bedrucken mit mehrfarbigen Dekorelementen mit zusätzlichen Symbolen versehen werden, wodurch eine große Gestaltungsvielfalt erreicht wird.

Um den Kraftstoffverbrauch möglichst gering zu halten, ist es erstrebenswert, auch das Gewicht dieser Zierteile möglichst klein zu halten. Aufgrund des Erscheinungsbildes des Kunststoffs, welcher im Normalfall nicht die hohen Anforderungen erfüllen kann, die an dekorative Oberflächen gestellt werden, wird die sichtbare Oberfläche beispielsweise durch Aluminiumblechteile gebildet. Um gleichzeitig das Gewicht und die Kosten des Bauteils möglichst gering zu gestalten, sollte das Metall möglichst dünn beispielsweise nur die sichtbaren Oberflächenbereiche als Metallblech ausgebildet sein. Dies geht häufig mit einem gewissen Stabilitätsproblem in dem Bauteil einher, welchem im Stand der Technik entgegengewirkt wird, indem zur Stabilisierung des Bauteils eine Trägerschicht unterhalb der Dekorschicht vorgesehen wird. Für die Trägerschicht wird ein möglichst leichtes aber stabiles Kunststoffmaterial gewählt. Dies hat ferner den Vorteil einer wesentlich größeren Gestaltungsfreiheit aufgrund der wesentlich einfacheren und flexibleren Verarbeitbarkeit von Kunststoff, so dass auch eine Anpassung an verschiedene Einbaugeometrien und unterschiedlich ausgebildete Bauräume im Fahrzeug möglich sind.

Im Stand der Technik werden häufig Dekorschicht und Trägerschicht zunächst separat gefertigt, wobei in der Trägerschicht eine Vertiefung ausgebildet wird, in die bei der Montage des Dekorteils zunächst ein Klebestreifen eingesetzt wird, um über diesen die Trägerschicht und die Dekorschicht miteinander zu verbinden. Zwischen Dekorschicht und Trägerschicht bildet sich zwangsläufig ein Spalt, in dem sich Schmutz und Wasser sammeln kann, welche auch schwer daraus wieder zu entfernen sind. Auch die an solche Metall-Kunststoff-Verbundkörpern bei Klimawechseltests zwischen -40°C und 80°C ergebenden Anforderungen können häufig aufgrund der stoffschlüssigen Verbindung der Komponenten entweder aufgrund Alterung des verwendeten Klebstoffes oder aber auch aufgrund der fehlenden Möglichkeit einer Relativbewegung zwischen den Komponenten und der Folge von Spannungen aufgrund unterschiedlicher Wärmeausdehnungskoeffizienten nicht erfüllt werden.

Der zur Befestigung der Aluminiumschiene einzusetzende Klebestreifen bringt weitere Nachteile mit sich. Zum einen stellt er sowohl einen erheblichen Kostenfaktor bei der Herstellung und anschließend bei der Montage dar. Ferner können einige Kwetatoffoberflächen wie beispielsweise Polypropylen(PP)-Oberflächen aufgrund ihrer niedrigen Oberflächenspannung nur mit einem solchen Klebestreifen zuverlässig beklebt werden, wenn sie vorher einer Vorbehandlung beispielsweise das Auftragen eines Primers oder einer Korona oder auch ein Beflämmen unterzogen werden, was ebenfalls mit zusätzlichen Arbeits- und Materialkosten einhergeht.

Um diesen Nachteilen entgegenzuwirken, wurde im Stand der Technik vorgeschlagen, die Dekorleiste mit Kunststoff zu umspritzen und dabei so zu umgeben, dass die Schichten bereits während des Umspritzens eine feste Verbindung miteinander aufweisen. Diese Vorgehensweise hat aber den Nachteil, dass bei der Herstellung des Verbundkörpers insbesondere durch das unterschiedliche Schrumpfungsverhalten erhebliche Spannungen im Bauteil auftreten, durch welche die Dekorschicht verbogen werden kann.

Im Stand der Technik wurde daher vorgeschlagen, ein Verbundbauteil auszubilden, bei dem zwischen der metallischen Schicht und der Kunststoffträgerschicht eine Zwischenschicht angeordnet ist, um dadurch eine Entkopplung zwischen der metallischen Schicht und der Kunststoffschicht bereitzustellen und so Spannungen durch die unterschiedlichen Längenausdehnungen der Verbundmaterialien aufgrund der unterschiedlichen Elastizitätsmodule der metallischen Schicht und der Kunststoffschicht auszugleichen. Dieser Fertigvngsschritt sorgt zwar dafür, dass bei geeigneter Auswahl des Materials der Zwischenschicht Verzug ausgeglichen wird, jedoch stellt sich der Herstellungsprozess dieser Dekorbauteile als äußerst aufwendig heraus. Außerdem erweist sich die Prozessführung eines solchen Mehrkomponenten-Kunststoff-Spritzverfahrens in Kombination mit einer metallischen Dekorschicht als äußerst schwierig, da das unterschiedliche Schrumpfungsverhalten von nunmehr drei verschiedenartigen Werkstoffen während der Abkühlung des Bauteils von der Einspritztemperatur auf Raumtemperatur Berücksichtigung in der Prozessführung finden muss, wodurch es häufig zu einer Stauchung der Dekorschicht oder aber auch zu Spaltbildungen zwischen Kunststoffschicht und Dekorschicht kommt.

Es ist daher eine Aufgabe der vorliegenden Erfindung, einen Kunststoff-Metall-Verbundkörper und ein verfahren zu dessen Herstellung bereitzustellen, welches bei einfacher Prozessführung einen Verzug des Bauteils aufgrund von Schrumpfungen erfolgreich verhindert.

Diese Aufgabe wird erfindungsgemäß dadurch gelöst, dass auf Höhe eines Randbereiches der metallischen Dekorschicht mindestens eine Aussparung in der Form einer Schrumpfungstasche in der Trägerschicht vorgesehen ist, die eine Relativbewegung zwischen Dekorschicht und Trägerschicht während des Abkühlens ermöglicht, um ein unterschiedliches Schrumpfungsverhalten von Dekorschicht und Trägerschicht während des Abkühlens nach der Fertigung auszugleichen.

Mit anderen Worten wird das verstärkte Schrumpfungsverhalten des Kunststoffes beim Abkühlen von der Einspritztemperatur, die bei einem Großteil der eingesetzten Kunststoffe zwischen 260 und 280°C liegt, bis auf Raumtemperatur dadurch ausgeglichen, dass Schrumpfungstaschen in Länge- und/oder Querrichtung entlang der Randbereiche der Dekorschicht vorgesehen werden, die eine gezielte Relativbewegung zwischen Trägerschicht und Dekorschicht während des Abkühlens ermöglichen, so dass die Schrumpfungen des Kunststoffes keine Spannungen auf die Dekorschicht aufbringen, da durch das Schrumpfen zunächst dieser durch die Schrumpfungstaschen bereitgestellte Zwischenraum ein Stauchen der Dekorschicht verhindert.

Um eine möglichst ungehinderte Relativbewegung der Schichten während des abkühlungsbedingten Schrumpfens zu ermöglichen, sind in einem Ausführungsbeispiel die Schrumpfungstaschen so in der Trägerschicht angeordnet sind, dass sie zumindest einen Teilabschnitt des Randbereiches mindestens einer Stirnseite der Dekorschicht, insbesondere der Stirnseite in dem Bereich der größten Schrumpfung der Trägerschicht, freilegt.

In einen Ausführungsbeispiel der vorliegenden Erfindung ist die Schrumpfungstasche an der der Dekorschicht abgewandten Seite der Trägerschicht und somit an der nicht sichtbaren Seite des Kunststoff-Metall-Verbundkörpers ausgebildet.

Werden die Abmessungen der Schrumpfungstasche, insbesondere ein durch die Schrumpfungstasche zwischen Stirnseite der Dekorschicht und Trägerschicht freibleibender Raum R, vorteilhaft an das Schrumpfungsverhältnis von Dekorschicht zu Trägerschicht angepasst, so kann erreicht werden, dass die Schrumpfungstasche nach dem Abkühlen des Bauteils möglichst klein ist, so dass eine eventuelle Schwächung des Bauteils möglichst gering ausfällt.

Alternativ ist es aber auch möglich, zur Reduktion des Gewichts des Kunststoff-Metall-Verbundkörpers die Schrumpfungstasche möglichst groß auszulegen und beispielsweise den Randbereich der Dekorschicht sowiet freizulegen, dass nur noch ein oder wenige Befsetigungsstege zur Positionierung der Dekorschicht in der Trägerschicht stehen bleiben. Dies erfordert eine Abwägung zwischen der Erfüllung der Trägerfunktion und damit der Stabilität des Bauteils gegenüber der Gewichtsreduktion.

In einem bevorzugten Ausführungsbeispiel weist die Schrumpfungstasche mindestens eine Breite auf, die der Hälfte der Differenz der von der Dekorschicht und der Trägerschicht jeweils zurückgelegten Schrumpfungswege, die sich aus unterschiedlichen Längenausdehnungakoeffizienten von Dekorschicht und Trägerschicht ergeben, entspricht.

In einem weiteren Ausführungsbeispiel der vorliegenden Erfindung sind Positioniermittel insbesondere Positioniernasen oder -haken an der Dekorschicht und/oder der Trägerschicht ausgebildet. Dabei sind die Positioniermittel vorteilhaft so angeordnet, dass sie eine schrumpfungeausgleichende Relativbewegung zwischen den Bauteilen zulassen, andererseits eine von der schrumpfungeausgleichenden Relativbewegung abweichende Verschiebung der Bauteile aber verhindern.

Um ein möglichst einfaches Reinigen der Dekoroberfläche zu ermöglichen, kann in einem weiteren Ausführungsbeispiel die Trägerschicht im Übergang zur Dekorschicht abgeschrägt ausgeführt sein.

In einem weiteren Ausführungsbeispiel der vorliegenden Erfindung weist der Kunststoff-Metall-Verbundkörpers mindestens ein Verzierelement auf, welches so in die Schrumpfungstasche einsetzbar ist, dass es die Schrumpfungstasche zumindest teilweise überdeckt.

Zur Herstellung des Kunststoff-Metall-Verbundkörpers wird zunächst durch Hinterspritzen oder Umspritzen der metallischen Dekorschicht mit Spritz-, Spritzguss- oder Pressverfahren eine Trägerschicht mit der metallischen Dekorschicht verbunden, wobei das Spritzguss- oder Presswerkzeug so ausgelegt ist, dass während des Hinterspritzens oder Umspritzens im Bereich der Endabschnitte der metallischen Dekorschicht mindestens eine Aussparung in der Form einer Schrumpfungstasche in der Trägerschicht vorgesehen wird, welche eine Relativbewegung zwischen Dekorschicht und Trägerschicht während des Abkühlens ermöglicht, um einen Verzug der Bauteile aufgrund einer von dem unterschiedlichen Schrumpfungsverhalten von Dekorschicht und Trägerschicht hervorgerufenen ungewollten Materialverdrängung während des Abkühlens nach der Fertigung auszugleichen. Diese kann beispielsweise erzeugt werden, indem in dem Werkzeug ein oder mehrere entsprechende Vorsprünge in Höhe der End- bzw. Randbereiche der Dekorschicht im Werkzeug ausgebildet sind.

Hinsichtlich weiterer vorteilhafter Ausführungsformen der vorliegenden Erfindung wird auf die Unteransprüche sowie die nachfolgende Beschreibung eines Ausführungsbeispiels anhand der beiliegenden Zeichnungen verwiesen. Es zeigt:
- Figur 1: einen Kunststoff-Metall-Verbundkörper gemäß der Erfindung; und
- Figur 2: eine vergrößerte Teildarstellung des Verbundkörpers gemäß Figur 1 im Schnitt.

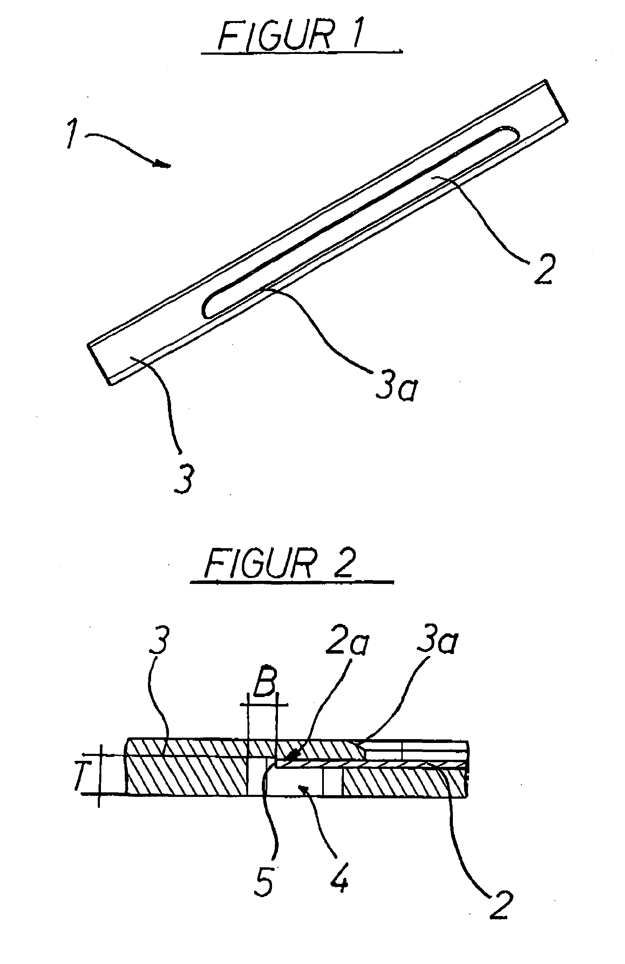

Figur 1 zeigt einen erfindungsgemäßen Kunststoff-Metall-Verbundkörper in Form einer Dekorfußleiste 1 für eine Kraftfahrzeug.

Die Fußleiste 1 weist eine Dekorschicht 2 aus Aluminium auf, die von einer Trägerschicht 3 aus Kunststoff umgeben bzw. umschlossen ist. Im Übergangsbereich zwischen Trägerschicht 3 und Dekorschicht 2 sind Abschrägungen 3a ausgebildet, die das Reinigen des für einen Fahrer sichtbaren Bereichs der Dekorschicht von Staub oder Schmutzwasser erleichtern und gleichzeitig ein ästhetisch ansprechendes und hochwertiges Erscheinungsbild vermitteln.

Die Dekorschicht 2 ist hier als lichtundurchlässige Aluminiumschicht ausgebildet. In einem nicht dargestellten weiteren Ausführungsbeispiel sind in der Dekorschicht lichtdurchlässige Bereiche bzw. Aussparungen, beispielsweise in Form von Schriftzeichen oder Symbolen vorgesehen, die über hinter der Trägerschicht 3 oder an der Trägerschicht 3 angeordnete Leuchtmittel beleuchtbar sind. Natürlich kann die Dekorschicht auch durch Ätzen oder Bedrucken mit mehrfarbigen Dekorelementen mit zusätzlichen Symbolen versehen werden oder auch ein Muster in die Oberfläche eingeprägt werden, wodurch eine große Gestaltungsvielfalt erreicht wird.

Die Figur 2 zeigt eine vergrößerte Teildarstellung der Fußleiste 1 gemäß Figur 1 im Schnitt. Um einen Ausgleich des unterschiedlichen Schrumpfungsverhaltens von Dekorschicht 2 und Trägerschicht 3 beim Abkühlen der Fußleiste 1 auszugleichen, sind an Randbereichen der metallischen Dekorschicht 2 in der Trägerschicht 3 Schrumpfungstaschen 4 ausgebildet. Die Schrumpfungataschen 4 weisen eine Breite B auf, die der Hälfte der Differenz der von der Dekorschicht 2 und der Trägerschicht 3 jeweils zurückgelegten Schrumpfungswege, die sich aus unterschiedlichen Längenausdehnungskoeffizienten von Dekorschicht und Trägerschicht ergeben, entspricht. Die Tiefe T der Schrumpfungstasche 4 ist so ausgelegt, dass die Stirnseite 5 des Randbereichs 2a der Dekorschicht 2 nicht mit der Trägerschicht 3 in Berührung kommt. Mit anderen Worten ist die Schrumpfungstasche 4 so angeordnet, dass sie den Teilabschnitt des Randbereiches 2a der Stirnseite 5 der Dekorschicht 2 senkrecht zur Längsausdehnung der Trägerschicht 3 und somit im Bereich der größten Schrumpfung der Trägerschicht 3 freilegt. Dadurch wird die Stirnseite 5 des Randbereichs 2a der Trägerschicht 2 nicht von der Trägerschicht 3 überdeckt und eine Relativbewegung zwische Dekorschicht 2 und Trägerschicht 3 erleichtert.

In der Dekorschicht 2 sind hier nicht dargestellte Positioniermittel in Form von Positioniernasen ausgebildet. Dabei sind die Positioniernasen so angeordnet, dass sie eine schrumpfungsausgleichende Relativbewegung zwischen den Bauteilen zulassen, andererseits eine von der schrumpfungsausgleichenden Relativbewegung abweichende Verschiebung der Bauteile aber blockieren.

Die Herstellung des Dekorelements 1 in Form einer Fußleiste geschieht wie folgt. Zunächst wird die Dekorschicht 2 mittels im Stand der Technik bekannter Herstellungsverfahren hergestellt und gegebenenfalls einem Druck- oder Prägeverfahren zu Dekorationazwecken unterzogen. Anschließend wird das fertige Bauteil in die Kavität einer Spritzgussmaschine eingelegt. Dann wird der sichtbare Oberflächenbereich der Dekorschicht mittels eines Stempels abgedichtet, um ein Eindringen der Trägerschicht in den sichtbaren Bereich der Fußleiste 1 zu verhindern. Der Stempel ist mit einer Beschichtung versehen, um zum Einen die Dekorschicht vor einem Verkratzen zu schützen und zum Anderen, um für eine bessere Abdichtung gegenüber der später einzuspritzenden Trägerschicht 3 zu sorgen. Die Dekorschicht wird dabei in eine Halterung gelegt, deren geometrische Abmessungen den Abmessungen der Schrumpfungstaschen 4 entsprechen. Die Halterung ragt dabei leicht über die dem Stempel zugehörende Seite der Dekorschicht 2 hinaus.

Nach Schließen der Kavität und Verfahren des Stempels wird die Kavität zunächst auf Einspritztempertur erwärmt und anschließend die Trägerschicht derart in die Kavität eingespritzt, dass sie das Dekorteil 2 vollständig umgibt. Anschließend wird die Kavität und damit das Dekorteil 1 auf ca. 80°C abgekühlt und anschließend aus der Kavität entnommen, um an der Umgebungsluft auf Raumtemperatur weiter abzukühlen.

## Patentansprüche

1. Kunststoff-Metall-Verbundkörper (1), insbesondere zum Einsatz in Kraftfahrzeugen, mit einer Dekorschicht (2) aus Metall und einer Kunststoffschicht als Trägerschicht (3), welche über ein Spritz-, Spritzguss- oder Pressverfahren mit der Dekorschicht (2) verbunden ist, **dadurch gekennzeichnet, dass** auf Höhe eines Randbereiches (2a) der metallischen Dekorschicht (2) mindestens eine Aussparung in der Form einer Schrumpfungstasche (4) in der Trägerschicht vorgesehen ist, die eine Relativbewegung zwischen Dekorschicht (2) und Trägerschicht (3) während des Abkühlens ermöglicht, um ein unterschiedliches Schrumpfungsverhalten von Dekorschicht (2) und Trägerschicht (3) während des Abkühlens nach der Fertigung auszugleichen.

2. Kunststoff-Metall-Verbundkörper (1) nach Anspruch 1, **dadurch gekennzeichnet, dass** die Schrumpfungstaschen (4) so angeordnet sind, dass sie zumindest einen Teilabschnitt des Randbereiches (2a) mindestens einer Stirnseite (5) der Dekorschicht (2), insbesondere der Stirnseite (5) in dem Bereich der größten Schrumpfung der Trägerschicht (3), freilegt.

3. Kunststoff-Metall-Verbundkörper (1) nach Anspruch 1, **dadurch gekennzeichnet, dass** die Abmessungen der Schrumpfungstasche (,4) insbesondere ein durch die Schrumpfungstasche (4) zwischen Stirnseite (5) der Dekorschicht (2) und Trägerschicht (3) freibleibender Raum (R), an ein Schrumpfungsverhältnis Dekorschicht (2) zu Trägerschicht (3) angepasst sind.

4. Kunststoff-Metall-Verbundkörper (1) nach einem der Anspruche 1 bis 3, **dadurch gekenntzeichnet, dass** die Schrumpfungstasche (4) mindestens eine Breite aufweist, die der Hälfte der Differenz der von der Dekorschicht (2) und der Trägerschicht (3) jeweils zurückgelegten Schrumpfungswege, die sich aus unterschiedlichen Längenausdehnungskoeffizienten von Dekorschicht (2) und Trägerschicht (3) ergeben, entspricht.

5. Kunststoff-Metall-Verbundkörper (1) nach einem der vorhergehenden Ansprüche, **dadurch gekennzeichnet, dass** Positioniermittel insbesondere Positioniernasen oder - haken an der Dekorschicht (2) und/oder der Trägerschicht (3) ausgebildet sind.

6. Kunststoff-Metall-Verbundkörper (1) nach einem der vorhergehenden Ansprüche, **dadurch gekennzeichnet, dass** die Trägerschicht (3) im Berührungs- bzw. Überdeckungsbereich mit der Dekorschicht (2) angeschrägt ausgeführt ist.

7. Kunststoff-Metall-Verbundkörper (1) nach einem der vorhergehenden Ansprüche, **dadurch gekennzeichnet**, er mindestens ein Verzierelement aufweist, welches so in die Schrumpfungstasche (4) einsetzbar ist, dass es die Schrumpfungstasche (4) zumindest teilweise überdeckt.

8. Verfahren zur Herstellung eines aus wenigstens einer metallischen Dekorschicht (2) und wenigstens einer Trägerschicht (3) aus Kunststoff bestehenden Kunststoff-Metall-Verbundkörpers (1), insbesondere nach einem der Ansprüche 1 bis 6, **dadurch gekennzeichnet, dass** durch Hinterspritzen der metallischen Dekorschicht (2) mittels Spritz-, Spritzguss- oder Pressverfahrens eine Trägerschicht (3) mit der metallischen Dekorschicht (2) verbunden wird, wobei während des Hinterspritzens im Bereich der Endabschnitte der metallischen Dekorschicht (2) mindestens eine Aussparung in der Form einer Schrumpfungstasche (4) in der Trägerschicht (3) vorgesehen ist, die eine Relativbewegung zwischen Dekorschicht (2) und Trägerschicht (3) während des Abkühlens ermöglicht, um ein unterschiedliches Schrumpfungsverhalten von Dekorschicht (2) und Trägerschicht (3) während des Abkühlens nach der Fertigung auszugleichen.

9. Verfahren nach Anspruch 8, **dadurch gekennzeichnet, dass** (3) vor oder während des Hinterspritzens Positioniernasen an der Dekorschicht (2) und/oder der Trägerschicht ausgebildet werden.

10. verfahren nach Anspruch 8 oder 9, **dadurch gekennzeichnet, dass** während oder nach dem Abkühlen des Kunststoff-Metall-Verbundkörpers mindestens ein Verzierelement in die Schrumpfungstasche eingesetzt wird.
